# EUROPÄISCHE PATENTSCHRIFT

(11) **EP 2 792 882 B1**
(45) Veröffentlichungstag und Bekanntmachung des Hinweises auf die Patenterteilung: **09.03.2016**
(21) Anmeldenummer: 13005925.6
(22) Anmeldetag: 19.12.2013
(51) Int. Cl.: F04B 39/06, B60T 13/26, B60T 17/00, F04B 39/12, F04B 39/16

(54) **Luftpresser für eine Druckluftanlage, insbesondere für eine Druckluftbremsanlage eines Nutzfahrzeugs**
Air compressor for a compressed air system, in particular for a compressed air brake system for a commercial vehicle
Compresseur d'air pour une installation d'air comprimé, notamment pour une installation de freinage à air comprimé d'un véhicule utilitaire

(30) Priorität: 18.04.2013 DE 102013006627
(43) Veröffentlichungstag der Anmeldung: 22.10.2014
(73) Patentinhaber: MAN Truck & Bus AG, 80995 München (DE)
(72) Erfinder: Hofstetter, Thomas, 84048 Mainburg (DE)

(56) Entgegenhaltungen:
- CN-U- 201 925 131
- FR-A1- 2 542 039
- JP-A- H0 849 674
- US-A- 3 712 282
- US-A- 5 885 060
- US-B1- 6 283 725

## Beschreibung

Die Erfindung betrifft eine Luftpresservorrichtung für eine Druckluftanlage, insbesondere für eine Druckluftbremsanlage eines Nutzfahrzeugs nach dem Oberbegriff des Anspruchs 1.

Luftpresser als motorangetriebene Hubkolben-Luftpresser für Druckluftbremsanlagen von Nutzfahrzeugen sind allgemein bekannt. Der Antrieb erfolgt hier üblicherweise gekoppelt an die Motordrehzahl durch einen Riementrieb oder Zahnradtrieb.

Dem Luftpresser ist bei bekannten Druckluftbremsanlagen eine Kühlwendel mit anschließendem Luftdrucktrockner nachgeschaltet. Der Luftpresser saugt Ober einen Luftfilter Umgebungsluft an und fördert diese nach der Kompression durch die Kühlwendel zum Lufttrockner. Durch die Kompression wird die Druckluft erhitzt und in der Kühlwendel vor dem Eintritt in den Lufttrockner abgekühlt. Bei der Abkühlung in der Kühlwendel kann der in der angesaugten Umgebungsluft enthaltene Wassergehalt kondensieren und insbesondere bei einem Kaltstart bei tiefen Umgebungstemperaturen kann die Kühlwendel vereisen. Dies kann die Funktion der Druckluftbremsanlage und gegebenenfalls weiterer druckluftbetätigter Nebenverbraucher, wie zum Beispiel eine Dauerbremse, eine Kupplungsbetätigung, etc. negativ beeinflussen.

JP H08 49674 A, als nächstliegender Stand der Technik angesehen, offenbart ein Verfahren zum Kühlen von komprimiertem Gas, wobei eine den Kühler umgehende Bypassleitung vorgesehen ist. Wenn die Temperatur des komprimierten Gases einen vordefinierten Schwellenwert unterschreitet, wird der Fluss der komprimierten Luft durch die Bypassleitung erhöht. US 6 283 725 B1 offenbart ein Verfahren und eine Vorrichtung, bei denen komprimiertes heißes Gas zu einem Bypass einer Kühlvorrichtung geleitet wird, wenn die Umgebungstemperatur sich dem Gefrierpunkt nähert, um ein Gefrieren der komprimierten Luft in der Kühleinrichtung zu vermeiden. US 3 712 282 A offenbart ein Temperatursteuersystem für einen Supercharger eines Verbrennungsmotors. Die dem Verbrennungsmotor zugeführte Luft wird gesteuert durch Vorsehen eines selektiv zuschaltbaren Bypasses für die Luft, die eine Kühleinheit umgeht, wobei die Luft in Abhängigkeit von der Umgebungstemperatur in den Bypass geleitet wird. CN 201 925 131 U offenbart ein Wärmerückgewinnungssystem für eine Luftkompressor, insbesondere für einen wassergekühlten Luftkompressor. US 5 885 060 A offenbart wiederum lediglich einen Druckluftkühler, wobei alternativ wiederum eine Bypassleitung vorgesehen ist, über die die komprimierte Luft wahlweise geleitet werden kann. FR 2 542 039 A1 offenbart ebenfalls wiederum einen Luftpresser mit einer nachgeschalteten zweistufigen Kühlstrecke, wobei für jede Teilkühlstrecke wiederum eine Bypassleitung vorgesehen ist, um bei Eisbildung die komprimierte Luft über die Bypassleitung zu leiten.

Aufgabe der Erfindung ist es, demgegenüber eine gattungsgemäßen Luftpresservorrichtung so weiterzubilden, dass mit einer einfachen und kostengünstigen Maßnahme eine Vereisung der Kühlwendel verhindert wird.

Diese Aufgabe wird gelöst mit den Merkmalen der unabhängigen Ansprüche. Vorteilhafte Ausgestaltungen sind Gegenstand der darauf rückgezogenen Unteransprüche,

Erfindungsgemäß ist dem Luftpresser ein Druckluft-Kühler nachgeordnet mit einem von einem Kühlmedium durchströmten Kühlergehäuse, in dem eine erste luftführende, vorzugsweise rohrförmige, Druckluft-Kühlstrecke (15) als kurze Druckluft-Kühlstrecke und eine demgegenüber definiert längere zweite luftführende, vorzugsweise rohrförmige, DruckluftKühlstrecke (16) als lange Druckluft-Kühlstrecke (16) enthalten sind. Diese Kühlstrecken sind endseitig für einen gemeinsamen Druckluftausgang verbunden.

Zudem ist dem Drucklufteingang des Druckluft-Kühlers ein temperaturgeregelter Druckluftverteilter zugeordnet, der zum Erreichen und zur Einhaltung einer Soll-Temperatur am Druckluftausgang des Druckluft-Kühlers in Abhängigkeit einer dort erfassten Ist-Temperatur die zugeführte Druckluft auf den Eingang der kurzen Druckluft-Kühlstrecke und/oder den Eingang der langen Druckluft-Kühlstrecke verteilt.

Die Regelung/Steuerung erfolgt dabei dergestalt, dass bei einem Kaltstart die kurze Druckluft-Kühlstrecke freigegeben ist. Ab einer bestimmten Temperatur am Druckluftausgang wird die lange Druckluft-Kühlstrecke freigegeben und die kurze Druckluft-Kühlstrecke verschlossen. In einem Zwischenbereich wird durch Mischen der Druckluft aus der kurzen DruckluftKühlstrecke und der langen Druckluft-Kühlstrecke immer die optimale Soll-Temperatur am Druckluftausgang des Druckluft-Kühlers erreicht und eingehalten.

Vorteilhaft wird damit einer Vereisung der Kühlwendel entgegengewirkt und die Kühlwendel kann zudem relativ einfach aufgebaut sein.

In einer besonders bevorzugten Ausführungsform ist der vorstehende Druckluft-Kühler mit seiner Temperaturregelung in einem Luftpresserkopf integriert, so dass damit keine zusätzlichen externen Bauteile erforderlich sind. Kühlwendelvarianten können dadurch eingeschränkt werden. Bei einer Integration im Luftpresserkopf kann in der Kaltstartphase bei aktivierter kurzer Druckluft-Kühlstrecke der Temperaturanstieg besonders schnell erfolgen und dadurch eine Vereisung der nachgeschalteten Kühlwendel sicher verhindert werden.

Die erfindungsgemäße Anordnung und Maßnahme ist insbesondere für einen Luftpresser als Hubkolben-Luftpresser geeignet, der drehzahlgekoppelt von einer Brennkraftmaschine durch einen Riementrieb oder Zahnradtrieb angetrieben wird.

Der Druckluftverteiler kann durch ein Mehrwegeventil, insbesondere durch ein 3/2-Wegeregelventil gebildet werden. Alternativ kann der Druckluftverteiler durch eine Regelklappe in einem Verteilergehäuse gebildet sein, wobei an das Verteilergehäuse der Drucklufteingang sowie die Eingänge der kurzen Druckluft-Kühlstrecke und der langen DruckluftKühlstrecke angeschlossen sind. Die Regelklappe ist dabei so angelenkt und verstellbar, dass sie jeweils eine Kühlstrecke verschließt oder teilweise beide Kühlstrecken für eine geeignete Zumischung offen sind, wobei den Kühlstrecken unterschiedliche Druckluftmengen zuführbar sind.

In einer einfachen Ausführungsform kann als Sensor- und Stellelement für das Regelventil oder die Regelklappe eine Bimetallanordnung, vorzugsweise integriert in den Luftpresserkopf, verwendet werden. Alternativ kann in einer externen Anordnung die Regelung mit einer Anordnung aus einem Istwert-Temperatursensor am Druckluftausgang mit einem Regler mit Sollwertvorgabe sowie mit einem nachgeschalteten Stellglied im Regelventil oder für die Regeklappe realisiert werden.

Ferner betrifft die Erfindung ein Verfahren zum Betreiben eines derartigen Luftpressers sowie ein Fahrzeug, insbesondere ein Nutzfahrzeug, mit einem derartigen Luftpresser. Die sich hiermit ergebenden Vorteile wurden bereits zuvor ausführlich gewürdigt.

Anhand einer Zeichnung wird eine Ausführungsform der Erfindung näher erläutert.

Es zeigen:
- Fig. 1: eine Schemadarstellung eines Luftpressers für eine Druckluftbremsanlage eines Nutzfahrzeugs, und
- Fig. 2: einen Schnitt durch eine schematische vergrößerte Darstellung des Luftpresserkopfs.

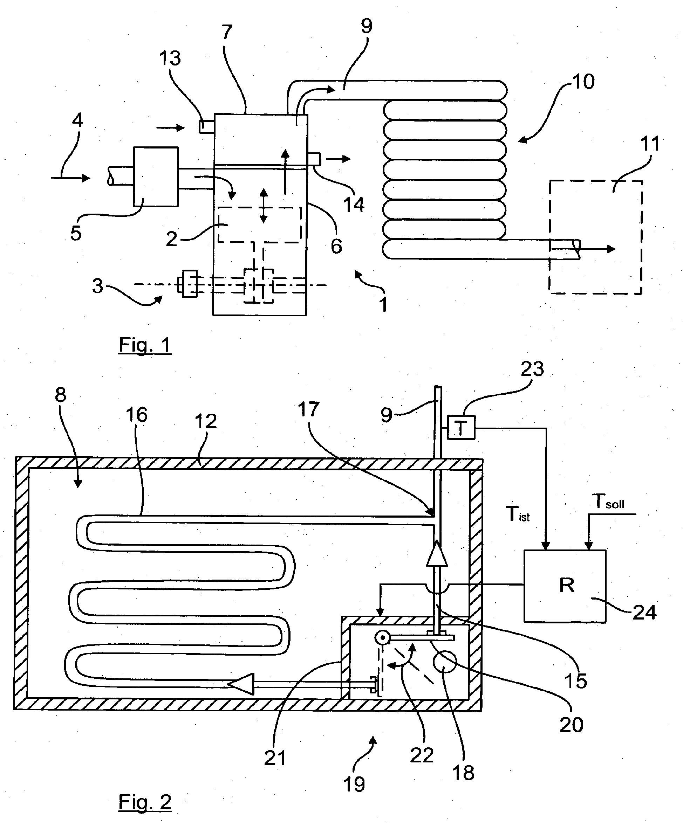

In Fig. 1 ist ein Luftpresser 1 als Hubkolben-Luftpresser dargestellt, dessen Hubkolben 2 über einen Zahnradtrieb 3 von der (nicht dargestellten) Brennkraftmaschine des Nutzfahrzeugs, gekoppelt an deren Drehzahl angetrieben wird.

Der Luftpresser 1 saugt Umgebungsluft (Pfeil 4) durch einen Luftfilter 5 und ein (nicht dargestelltes) Ansaugventil in den Luftpresser-Zylinder 6. Beim Kolbenhub wird bei geschlossenem Ansaugventil und einem geöffneten (nicht dargestellten) Auslassventil komprimierte Luft in einen Lufpresserkopf 7 gefördert. Im Luftpresserkopf 7 ist ein Druckluftkühler 8 integriert, der in Fig. 2 detailliert dargestellt ist und der über eine Druckluft-Ausgangsleitung 9 mit einer Kühlwendel 10 verbunden ist, der ein (schematisch strichliert dargestellter) Lufttrockner 11 nachgeschaltet ist.

Der im Luftpresserkopf 7 integrierte Druckluftkühler 8 weist ein Kühlergehäuse 12 auf, welches über einen Kühlmediumeingang 13 und einen Kühlmediumausgang 14 von einem Kühlmedium durchströmt ist (der Übersichtlichkeit halber ist dies in Fig. 2 nicht gezeigt).

Im Kühlergehäuse 12 ist hier beispielhaft eine rohrförmige kurze Druckluftkühlstrecke 15 und eine als Wendel ausgeführte, rohrförmige demgegenüber definiert längere Druckluftkühlstrecke 16 enthalten, welche an einer Verbindungsstelle 17 endseitig vor dem Austritt aus dem Kühlergehäuse 12 miteinander verbunden sind. Grundsätzlich können die Kühlstrecken aber selbstverständlich auch auf jede andere geeignete Art und Weise ausgebildet sein.

Der Drucklufteingang 18 im Kühlergehäuse 12 führt die Druckluft aus dem Luftpresserzylinder 6 und liegt in einem temperaturgeregelten Druckluftverteiler 19.

Der Druckluftverteiler 19 ist durch eine Regelklappe 20 in einem Verteilergehäuse 21 gebildet, die durch ein (nicht dargestelltes) Stellglied verschwenkt werden kann (Doppelpfeil 22).

In der dargestellten horizontalen Stellung der Regelklappe 20 ist der Eingang zur kurzen Druckluft-Kühlstrecke 15 geschlossen und der Eingang zur langen Druckluft-Kühlstrecke 16 mit einem direkten Strömungsweg zum Drucklufteingang 18 offen.

In der anderen vertikalen (strichliert dargestellten) Extremstellung der Regelklappe 20 ist dagegen die kurze Druckluft-Kühlstrecke 15 mit einem direkten Strömungsweg zum Drucklufteingang 18 offen und die lange Druckluft-Kühlstrecke 16 geschlossen. In Zwischenstellungen der Regelklappe 20 erfolgt eine geregelte Aufteilung der Druckluft auf die beiden Druckluftkühlstrecken 15, 16.

Dazu wird mit einem Istwert-Temperatursensor 23 die Temperatur in der Druckluftausgangsleitung 9 gemessen und einem Regler 24 zugeführt, an dem eine Soll-Temperatur vorgegeben ist. Der Ausgang des Reglers 24 ist mit dem Stellglied der Regelklappe 20 verbunden. Die Regelung bzw. Ansteuerung der Regelklappe 20 erfolgt dergestalt, dass im kalten Zustand (Kaltstart) die Regelklappe 20 die lange Druckluft-Kühlstrecke 16 verschließt (strichlierter Zustand). In diesem Zustand wird die Leitung zum Luft-Trockner 11 (Kühlwendel 10) schnell erwärmt und eine Vereisung wird verhindert.

Ab einer bestimmten erfassten Ist-Temperatur an der Druckluftausgangsleitung 9 am Luftpresserkopf 7 öffnet die Regelklappe 20 die lange Druckluft-Kühlstrecke 16 und verschließt zugleich die kurze Druckluft-Kühlstrecke 15 (horizontale Stellung der Regelklappe 20). Durch Mischen der Druckluft aus der kurzen Druckluft-Kühlstrecke 15 und der langen DruckluftKühlstrecke 16 wird mit einer in Zwischenstellungen verstellten Regelklappe 20 immer die optimale Solltemperatur am Druckluftausgang 9 des Kompressorkopfs 7 erreicht. Die Regelklappe 20 ist damit so ausgeführt und angesteuert, dass immer eine der beiden Kühlstrecken 15, 16 offen und eine geschlossen ist oder beide Kühlstrecken 15, 16 teilweise offen sind.

Anstelle der beispielhaft dargestellten externen Regelung mit einem externen Regler 24 kann auch eine Regelung der Regelklappe mit einer, vorzugsweise im Luftpresserkopf 7 enthaltenen Bimetallanordnung erfolgen.

### Bezugszeichenliste

- 1: Luftpresser
- 2: Hubkolben
- 3: Zahnradtrieb
- 4: Pfeil (Umgebungsluft)
- 5: Luftfilter
- 6: Luftpresser-Zylinder
- 7: Luftpresserkopf
- 8: Druckluft-Kühler
- 9: Druckluftausgangs-Leitung
- 10: Kühlwendel
- 11: Lufttrockner
- 12: Kühlergehäuse
- 13: Kühlmedium-Eingang
- 14: Kühlmedium-Ausgang
- 15: kurze Druckluft-Kühlstrecke
- 16: lange Druckluft-Kühlstrecke
- 17: Verbindungsstelle
- 18: Drucklufteingang
- 19: Druckluftverteiler
- 20: Regeklappe
- 21: Verteilergehäuse
- 22: Doppelpfeil
- 23: Istwert-Temperatursensor
- 24: Regler

## Patentansprüche

1. Luftpresservorrichtung (1) für eine Druckluftanlage eines Fahrzeugs, insbesondere für eine Druckluftbremsanlage eines Nutzfahrzeugs, umfassend
einen Hubkolben-Luftpresser (6, 2), aufweisend einen Hubkolben (2) und einen Luftpresser-Zylinder (6); und
einen dem Hubkolben-Luftpresser (6, 2) nachgeordneten Druckluft-Kühler (8), mit einem von einem Kühlmedium durchströmten Kühlergehäuse (12), in dem eine erste luftführende Druckluft-Kühlstrecke (15) als kurze Druckluft-Kühlstrecke und eine demgegenüber definiert längere zweite luftführende Druckluft-Kühlstrecke (16) als lange Druckluft-Kühlstrecke (16) angeordnet sind, die endseitig für einen gemeinsamen Druckluftausgang verbunden (17) sind, wobei dem Drucklufteingang (18) des Druckluft-Kühlers (8) ein temperaturgeregelter Druckluftverteiler (19) zugeordnet ist, der ausgebildet ist, zum Erreichen und zur Einhaltung einer Soll-Temperatur am Druckluftausgang (9) in Abhängigkeit einer dort erfassten Ist-Temperatur, die zugeführte Druckluft auf den Eingang der kurzen Druckluft-Kühlstrecke (15) und/oder den Eingang der langen DruckluftKühlstrecke (16) zu verteilen;
**dadurch gekennzeichnet,**
**dass** der Druckluft-Kühler (8) in einem Luftpresserkopf (7) der Luftpresservorrichtung (1) integriert ist.

2. Luftpresservorrichtung (1) nach Anspruch 1, **dadurch gekennzeichnet, dass** der Hubkolben-Luftpresser (6, 2) von der Brennkraftmaschine eines Fahrzeugs, insbesondere eines Nutzfahrzeugs, gekoppelt mit deren Drehzahl durch einen Riementrieb oder Zahnradtrieb (3) angetrieben wird.

3. Luftpresservorrichtung (1) nach einem der Ansprüche 1 bis 2, **dadurch gekennzeichnet, dass** der Druckluftausgang (9) über eine, vorzugsweise als Kühlwendel (10) ausgebildete, Leitung mit einem Lufttrockner (11) verbunden ist.

4. Luftpresservorrichtung (1) nach einem der Ansprüche 1 bis 3, **dadurch gekennzeichnet, dass** der Druckluftverteiler (19) durch ein Mehrwegeventil, insbesondere durch ein 3/2-Wegeregelventil gebildet ist.

5. Luftpresservorrichtung (1) nach einem der Ansprüche 1 bis 4, **dadurch gekennzeichnet, dass** der Druckluftverteiler (19) durch eine Regelklappe (20) in einem Verteilergehäuse (21) gebildet ist, wobei an das Verteilergehäuse (21) der Drucklufteingang (18) sowie die Eingänge der kurzen Duckluft-Kühlstrecke (15) und der langen DruckluftKühlstrecke (16) angeschlossen sind und die Regelklappe (20) so angelenkt und verstellbar ist, dass jeweils eine Kühlstrecke (15, 16) geschlossen oder beide Kühlstrecken (15, 16) teilweise offen sind.

6. Luftpresservorrichtung (1) nach Anspruche 4 oder Anspruch 5, **dadurch gekennzeichnet, dass** als Sensor-und Stellelement für das Regelventil oder die Regelklappe (20) eine Bimetallanordnung, vorzugsweise integriert im Luftpresserkopf (7), vorgesehen ist.

7. Luftpresservorrichtung (1) nach Anspruch 5 oder Anspruch 6, **dadurch gekennzeichnet, dass** die Regelung über eine Anordnung aus einem Istwert-Temperatursenors (23), einem Regler (24) mit Stellwertvorgabe und einem nachgeschaltete Stellantrieb erfolgt.

8. Fahrzeug, insbesondere Nutzfahrzeug, mit einer Luftpresservorichtung (1) nach einem der Ansprüche 1 bis 7.

## Claims

1. Air compressor device (1) for a compressed air system of a vehicle, in particular for a pneumatic brake system of a commercial vehicle, comprising a reciprocating piston air compressor (6, 2), having a reciprocating piston (2) and an air compressor cylinder (6); and
a compressed air cooler (8) which is arranged downstream of the reciprocating piston air compressor (6, 2), which compressed air cooler (8) has a cooler housing (12) through which a coolant flows and in which a first air-conducting compressed air cooling section (15) is arranged as a short compressed air cooling section, and a second air-conducting compressed air cooling section (16), longer than the first cooling section (15) by a defined amount, is arranged as a long compressed air cooling section (16), which cooling sections (15, 16) are connected at their ends to form a common compressed air outlet (17), wherein a temperature-regulated compressed air distributor (19), which is configured so that it distributes the supplied compressed air to the inlet of the short compressed air cooling section (15) and/or to the inlet of the long compressed air cooling section (16) as a function of an actual temperature detected at the compressed air outlet (9) in order to reach and maintain a reference temperature at the compressed air outlet (9), is associated with the compressed air inlet (18) of the compressed air cooler (8); **characterised in that** the compressed air cooler (8) is integrated in an air compressor head (7) of the air compressor device (1).

2. Air compressor device (1) according to Claim 1, **characterised in that** the reciprocating piston air compressor (6, 2) is driven by an internal combustion engine of a vehicle, in particular a commercial vehicle, and is coupled to the rotational speed of the internal combustion engine by a belt drive or gear drive (3).

3. Air compressor device (1) according to either of Claims 1 and 2, **characterised in that** the compressed air outlet (9) is connected via a line, preferably configured as a cooling spiral (10), to an air dryer (11).

4. Air compressor device (1) according to any one of Claims 1 to 3, **characterised in that** the compressed air distributor (19) is formed by a multi-way valve, in particular a 3/2-way directional control valve.

5. Air compressor device (1) according to any one of Claims 1 to 4, **characterised in that** the compressed air distributor (19) is formed by a control flap (20) in a distributor housing (21), the compressed air inlet (18) and the inlets of the short compressed air cooling section (15) and of the long compressed air cooling section (16) being connected to the distributor housing (21) and the control flap (20) being articulated and adjustable in such a way that one cooling section (15, 16) is closed at a time or both cooling sections (15, 16) are partially open.

6. Air compressor device (1) according to Claim 4 or Claim 5, **characterised in that** a bimetal arrangement, preferably integrated in the air compressor head (7), is provided as a sensor and actuating element for the control valve or control flap (20).

7. Air compressor device (1) according to Claim 5 or Claim 6, **characterised in that** the regulation is effected by means of an arrangement comprising a temperature actual value sensor (23), a controller (24) with setpoint specification, and an actuating drive connected to the output of the controller (24).

8. Vehicle, in particular commercial vehicle, having an air compressor device (1) according to any one of Claims 1 to 7.

## Revendications

1. Dispositif compresseur d'air (1) pour une instillation d'air comprimé d'un véhicule, en particulier pour une installation de freinage à air comprimé d'un véhicule utilitaire, comprenant un compresseur d'air à piston alternatif (6, 2), présentant un piston alternatif (2) et un cylindre de compresseur d'air (6) ; et
un refroidisseur d'air comprimé (8) monté en aval du compresseur d'air à piston alternatif (6, 2), comprenant un boîtier de refroidisseur (12) parcouru par un fluide de refroidissement, dans lequel sont disposées une première section de refroidissement d'air comprimé conduisant l'air (15) en tant que section de refroidissement d'air comprimé courte, et une deuxième section de refroidissement d'air comprimé conduisant l'air (16), nettement plus longue par rapport à la première, en tant que section de refroidissement d'air comprimé longue (16), qui sont connectées (17) du côté de l'extrémité en vue d'une sortie d'air comprimé commune, un distributeur d'air comprimé (19) régulé en température étant associé à l'entrée d'air comprimé (18) du refroidisseur d'air comprimé (8), lequel distributeur d'air comprimé est réalisé de manière à distribuer l'air comprimé acheminé à l'entrée de la section de refroidissement d'air comprimé courte (15) et/ou à l'entrée de la section de refroidissement d'air comprimé longue (16), afin d'atteindre et de maintenir une température de consigne à la sortie d'air comprimé (9) en fonction d'une température réelle détectée à cet endroit;
**caractérisé en ce que**
le refroidisseur d'air comprimé (8) est intégré dans une tête de compresseur d'air (7) du dispositif compresseur d'air (1).

2. Dispositif compresseur d'air (1) selon la revendication 1, **caractérisé en ce que** le compresseur d'air à piston alternatif (6, 2) est entraîné par le moteur à combustion interne d'un véhicule, en particulier d'un véhicule utilitaire, de manière accouplée à sa vitesse de rotation par le biais d'un entraînement à courroie ou à roue dentée (3).

3. Dispositif compresseur d'air (1) selon l'une quelconque des revendications 1 et 2, **caractérisé en ce que** la sortie d'air comprimé (9) est connectée à un sécheur d'air (11) par le biais d'une conduite réalisée de préférence sous forme de serpentin de refroidissement (10).

4. Dispositif compresseur d'air (1) selon l'une quelconque des revendications 1 à 3, **caractérisé en ce que** le distributeur d'air comprimé (19) est formé par une soupape à plusieurs voies, en particulier par une soupape de régulation à 3/2 voies.

5. Dispositif compresseur d'air (1) selon l'une quelconque des revendications 1 à 4, **caractérisé en ce que** le distributeur d'air comprimé (19) est formé par un clapet de régulation (20) dans un boîtier de distributeur (21), l'entrée d'air comprimé (18) ainsi que les entrées de la section de refroidissement d'air comprimé courte (15) et de la section de refroidissement d'air comprimé longue (16) étant raccordées au boîtier de distributeur (21) et le clapet de régulation (20) étant articulé et réglable de telle sorte qu'une section de refroidissement (15, 16) soit dans chaque cas fermée ou que les deux sections de refroidissement (15, 16) soient partiellement ouvertes.

6. Dispositif compresseur d'air (1) selon la revendication 4 ou 5, **caractérisé en ce qu'**il est prévu, en tant qu'élément capteur et de commande pour la soupape de régulation ou le clapet de régulation (20), un agencement bimétallique, de préférence intégré dans la tête du compresseur d'air (7).

7. Dispositif compresseur d'air (1) selon la revendication 5 ou 6, **caractérisé en ce que** la régulation s'effectue par le biais d'un agencement constitué d'un capteur de température à valeur réelle (23), d'un régulateur (24) avec prédéfinition de la valeur de réglage et d'un entraînement de commande aval.

8. Véhicule, en particulier véhicule utilitaire comprenant un dispositif compresseur d'air (1) selon l'une quelconque des revendications 1 à 7.
